# EUROPEAN PATENT SPECIFICATION

(11) **EP 3 162 535 B1**
(45) Date of publication and mention of the grant of the patent: **11.09.2019**
(21) Application number: 15192317.4
(22) Date of filing: 30.10.2015
(51) Int. Cl.: B29C 59/04, B29C 43/22, B29C 44/56

(54) **METHOD FOR SURFACE TREATMENT OF A THERMOPLASTIC POLYURETHANE TEXTURE WITH LAMINATED DEEP AND SHALLOW IMPRESSIONS**
VERFAHREN ZUR OBERFLÄCHENBEHANDLUNG EINER THERMOPLASTISCHEN POLYURETHANTEXTUR MIT LAMINIERTEN TIEFEN UND FLACHEN EINDRÜCKEN
PROCÉDÉ DE TRAITEMENT DE SURFACE D'UNE TEXTURE DE POLYURÉTHANE THERMOPLASTIQUE AVEC DES IMPRESSIONS STRATIFIÉES PROFONDES ET PEU PROFONDES

(43) Date of publication of application: 03.05.2017
(73) Proprietor: DingZing Advanced Materials Inc., Kaohsiung 812 (TW)
(72) Inventor: LIN, Keng-Hsien, 812 Kaohsiung (TW)
(74) Representative: Spengler, Robert

(56) References cited:
- EP-A2- 0 799 687
- GB-A- 1 543 977
- US-A- 4 211 743
- US-A1- 2009 202 810

## Description

### BACKGROUND OF THE INVENTION

### 1. Field of the Invention

The present invention relates to a method for the surface treatment of thermoplastic polyurethane textures with laminated deep and shallow impressions according to claim 1.

### 2. Description of the Related Art

An example of a method for surface treatment of a polyurethane texture is disclosed by document US 2009/0202810 A1.

The flexibility of PVC can be changed by way of an added plasticizer, and so manufacturers can easily create products with various flexibilities and shapes which are commonly found. However, PVC has poor high thermal resistance, poor flex resistance and poor impact absorption. Furthermore, dioxin, chlorine, heavy metal particulates and such poisonous substances are produced when products are disposed in high thermal environments or burned, and these toxins severely threaten our daily life and health. Therefore, with recent rise in environmental awareness, environmental materials are preferred for the production of products; for example, TPU is substituted for PVC.

To be specific, TPU is a kind of macromolecule elastomer provided with no plasticizer, and its physical properties are between rubber and plastic. When present as a rubber/plastic material, TPU provides wear resistance, flex resistance, high tensile, high tear strength and resistance to low temperatures, and it is also a form of non-toxic, environmental material, and so it can be extensively applied to shoes, sporting goods, clothing, medical supplies and so on.

With technological advances, consumers not only have requirements for product specifications and functions, but also care about product appearance when shopping. Taking the casing of a consumer electronic product for example, manufacturers usually print impressions onto the surface of the casing, which provides unique patterns and feelings to attract the consumers' attention.

Please refer to FIG. 1, which concerns Taiwan Invention Patent No. 1392592, known also as EP-A1-1 795 497, entitled "Apparatus for Pattern Replication with Intermediate Stamp", which operates mutually and simultaneously to perform a second step. In the first transfer printing unit, the impression duplication of a template 11 is formed in or on an intermediate disk, or to be better formed in or on a flexible polymer foil 13 by a transfer printing unit to obtain an intermediate stamp, and the polymer foil 13 is made from thermoplastic polymer, thermosetting polymer, or polymer. The intermediate stamp is moved from the first transfer printing unit to the second transfer printing unit, and in the second transfer printing unit, the intermediate stamp is utilized to transfer print the impression onto the moldable layer of a substrate 12 target surface by a second step.

From the above descriptions, certain problems still exist in the prior art method:

### 1. Increased defect rate in the process

The impression structure on the surface can be transfer printed onto the flexible polymer foil 13 by the template 11 to form a decorated impression on it. However, the above surface decoration technique is mostly utilized to decorate the surface only once; if the technique is repeated a second time, the existing decorated impression will be damaged and the defect rate will be increased in the process.

### 2. Complicated, time-wasting process

The prior art utilizes a double transfer printing process, and the transfer printing process of the second surface is performed after the first one has solidified. Therefore, this kind of process wastes time and resources.

### 3. No enhancement of visual impressions

The embossment is only able to be formed on the surface of the flexible polymer foil 13 by the template 11, but no vertical side decorative impressions can be formed, and so there is no 3D stylish decoration effect. Therefore, it cannot meet consumer requirements for visual impressions.

The above disadvantages express the problems of the current apparatus for pattern replication with intermediate stamp. Therefore, it is desirable to provide a device which can improve the present disadvantages in processing, or to provide a design for improving product yield rates, while enhancing the visual impression to satisfy the consumer requirements, and obtain competitive advantages in the market.

### SUMMARY OF EMBODIMENTS OF THE INVENTION

Therefore, an objective of an embodiment of the present invention is to provide a method for surface treatment of a thermoplastic polyurethane texture with laminated deep and shallow impressions comprising the following steps.

First, an unfinished thermoplastic polyurethane sheet is prepared. Next, a surface of the unfinished sheet is roll pressed by a first embossed roller set and a shallow impression is printed onto it to obtain a first embossed sheet. The first roller set is provided with two opposing first rollers and a heating unit connected to the two first rollers. The heat is directed into the first roller set by the heating unit to heat up the roll pressed unfinished sheet. Then, the first embossed sheet with the shallow impression is double pressed by a second embossed roller set and a deep impression is printed onto it to obtain a second embossed sheet with laminated shallow and deep impressions. The second roller set is provided with two opposing rollers, and a cooling unit is connected to the two second rollers. A coolant is directed into the two second rollers by the cooling unit, so the first roll pressed embossed sheet can be cooled and fixed during pressing.

Finally, the second embossed sheet is cut into predetermined lengths to obtain the thermoplastic polyurethane texture.

Another technique of an embodiment of the present invention is that the unfinished sheet is made by the steps in which a thermoplastic polyurethane material is prepared and after being melted, is extruded in predetermined amounts to obtain an intermediate unfinished sheet.

Another technique of an embodiment of the present invention is that the temperature of the heat is between 25 °C and 100 °C.

Another technique of an embodiment of the present invention is that after the shallow impression has been printed onto the surface by the first roller set for an interval of 1 to 10 seconds, the deep impression is printed onto the surface by the second roller set.

Another technique of an embodiment of the present invention is that the thermoplastic polyurethane material is foamed by way of an added vesicant.

Another technique of an embodiment of the present invention is that the thermoplastic polyurethane material can include one or more of methylene diphenyl diisocyanate, tolylene diisocyanate, polyether polyol, polycarbonate polyol.

Another technique of an embodiment of the present invention is that the hardness of the thermoplastic polyurethane material is in the range of 45 Shore D to 85 Shore A.

Another technique of an embodiment of the present invention is that the temperature of the coolant is between 25 °C and -20 °C.

Another technique of an embodiment of the present invention is that the unfinished sheet is irradiated by an infrared lamp to maintain a predetermined temperature. Moreover, the irradiation temperature of the infrared lamp is between 25 °C and 120 °C.

An advantage of embodiments of the invention is that through the shallow and deep impressions printed by the first and the second roller set, and a side impression formed at a different depth, the second embossed sheet with laminated shallow and deep impressions is obtained, so it can achieve an overall 3D decoration effect to satisfy the consumer requirements for visual impressions. Furthermore, the coolant is directed into the second roller set by the cooling unit to cool and fix the first roll pressed embossed sheet during pressing, and the shallow and deep impressions of the second embossed sheet can be fixed, so the processing time is shortened to prevent the impressions from being deformed or sticking together and the yield rate can be improved.

### BRIEF DESCRIPTION OF THE DRAWINGS

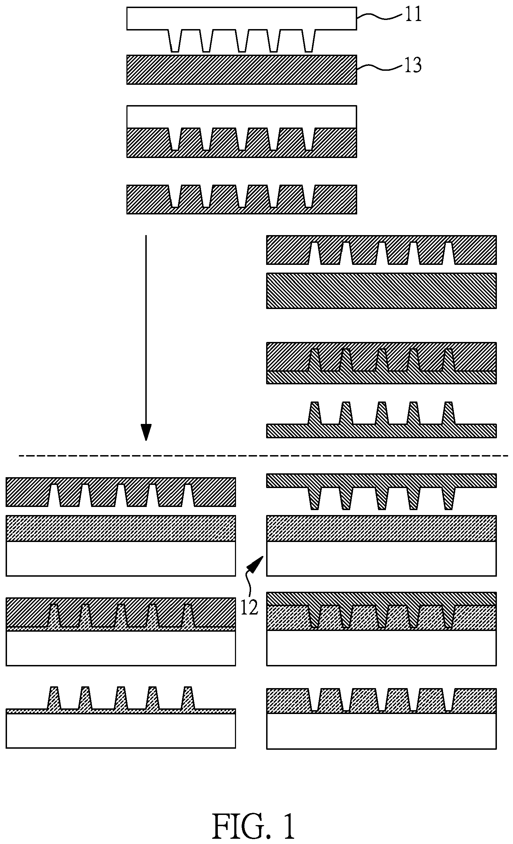

FIG. 1 is a flowchart of a prior art device disclosed in Taiwan Invention Patent No.I392592, showing an apparatus for pattern replication with an intermediate stamp;
FIG. 2 is a flowchart depicting a first preferred embodiment method according to an embodiment of the present invention;
FIG. 3 is a flowchart depicting an arrangement of a first preferred embodiment according to an embodiment of the present invention;
FIG. 4 is a cross-sectional view depicting an unfinished sheet, a first embossed sheet and a second embossed sheet of a first preferred embodiment method according to an embodiment of the present invention;
FIG. 5 is a flowchart depicting an arrangement of a second preferred embodiment according to an embodiment of the present invention;
FIG.6 is a flowchart depicting a third preferred embodiment method according to an embodiment of the present invention;
FIG.7 is a flowchart depicting an arrangement of a third embodiment method according to an embodiment of the present invention.

### DETAILED DESCRIPTION OF THE PREFERRED EMBODIMENTS

Specific structural and functional details disclosed herein will become apparent from the following descriptions of the three preferred embodiments of the present invention taken in conjunction with the accompanying drawings.

Before explaining the present method in detail, it is to be understood that similar elements are labeled with the same reference numbers.

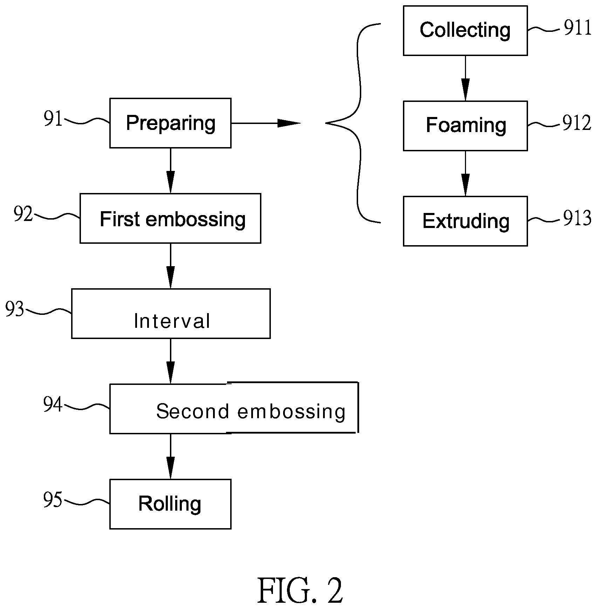

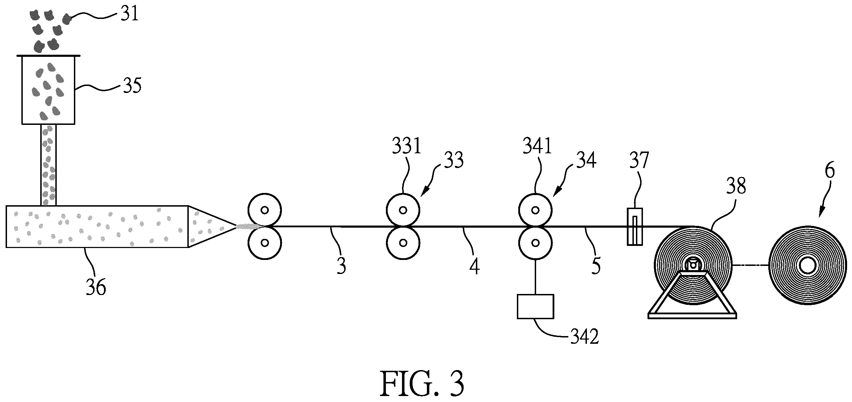

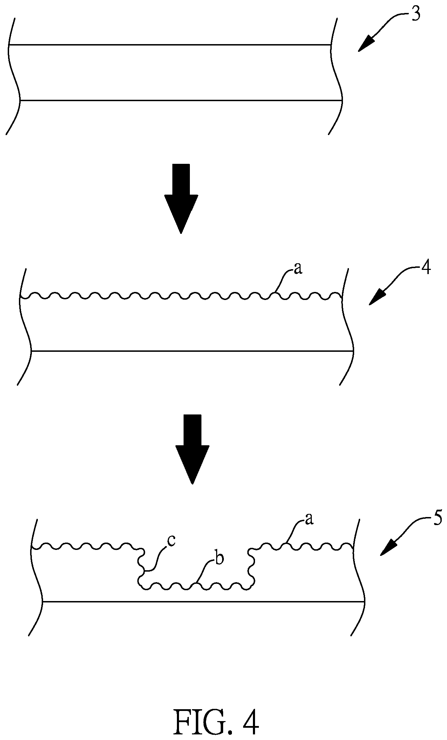

With reference to FIGs. 2, 3 and 4, a first embodiment of present invention is provided. A method for surface treatment of a thermoplastic polyurethane texture 6 with laminated deep and shallow impressions comprises a preparing step 91, a first embossing step 92, a second embossing step 93, an interval step 94, and a rolling step 95.

First, in the preparing step 91, an unfinished sheet 3 made from a polyurethane material 31 is prepared.

Furthermore, in step 91, the manufacturing method of the unfinished sheet 3 includes a collecting step 911, a foaming step 912, and an extruding step 913.

First, in the collecting step 911, a thermoplastic polyurethane material 31 is prepared which can include one or more of methylene diphenyl diisocyanate, tolylene diisocyanate, polyether polyol, polycarbonate polyol. Furthermore, a hardness of the thermoplastic polyurethane material is preferably in the range of 45 Shore D to 85 Shore A. Based upon user requirements, the thermoplastic polyurethane of different materials and hardness can be selected, so the above materials shall not be construed as limiting the invention.

It is worth mentioning that the texture made from the polyurethane material 31 not only provides good air permeability, water resistance and transparency, but is also biodegradable to reduce environmental pollution, and furthermore can achieve environmentally friendly energy-saving effects.

Next, in the foaming step 912, the thermoplastic polyurethane 31 is foamed by way of an added vesicant. Before the step 912 is performed, the thermoplastic polyurethane is dried out by a dryer 35, so that excess moisture is vaporized to prevent materials from being impacted by surface bubbles in subsequent processes, and the defect rate can thus be reduced.

Finally, in the extruding step 913, the thermoplastic polyurethane 31 is melted and extruded in predetermined amounts to obtain an intermediate unfinished sheet 3. The thermoplastic polyurethane 31 is poured into the inlet of an extruder 36, and extruded from the outlet of the extruder 36 to obtain the unfinished sheet 3.

It is worth mentioning that in the first preferred embodiment, the thermoplastic polyurethane is made by a series of coherent processes. The unfinished sheet 3 can also be delivered to outside processing factory for further processing to obtain the thermoplastic polyurethane texture 6. If the unfinished sheet 3 is delivered to a processing factory, the collecting step 911, the foaming step 912, and the extruding step 913 can be skipped based upon the customer requirements, and shall not be construed as limiting the invention.

Next, in the first embossing step 92, a surface of the unfinished sheet 3 is roll pressed by a first roller set 33 with an embossment and a shallow impression *a* is printed onto it to obtain a first embossed sheet 4. Moreover, the first roller set 33 is provided with two opposing rollers 331.

The unfinished sheet 3 extruded from the outlet of the extruder 36 enters into the entrance of the two first rollers 331, and is delivered from the exit of the two first rollers 331 to obtain the first embossed sheet 4.

The unfinished sheet 3 having performed the foaming step 912 and the extruding step 913 provides predetermined heat, and at this time, the shallow impression *a* is formed by the first roller set 33, it can not only save energy otherwise required for heating, but also can save the costs associated with such heating equipment.

Then, in the interval step 93, after the shallow impression *a* has been printed onto the surface by the first roller set 33 for an interval of 1 to 10 seconds, the second embossing step 94 is then performed.

Table 1 below provides interval times of three different prescriptions for the thermoplastic polyurethane 31. It can be understood that the Shore hardness for Prescription 1 is 85A, and its melting point is 155°C, with an interval time of 3 seconds; while the Shore hardness for Prescription 2 is 45D, and its melting point is 90°C, with an interval time of 1 second; the Shore hardness for Prescription 3 is 70A, and its melting point is 85°C, with an interval time of 8 seconds. From the above data, the thermoplastic polyurethane 31 with different prescriptions affects the hardness and melting points, and so the interval step 93 can be changed based upon the different prescriptions of the thermoplastic polyurethane 31.

**Table 1**

| Ingredient/ Prescription | Shore Hardness | Melting Point(°C) | Time(sec) |
|---|---|---|---|
| 1 | 85A | 155°C | 3 |
| 2 | 45D | 90°C | 1 |
| 3 | 70A | 85°C | 8 |

Next, in the second embossing step 94, the first embossed sheet 4 with the shallow impression *a* is double pressed by a second embossing roller set 34 and a deep impression b is printed onto it to obtain a second embossed sheet 5 with the laminated shallow impression *a* and a deep impression *b.* In other words, after the shallow impression *a* has been printed onto the surface by the first roller set 33 for an interval of 1 to 10 seconds, the deep impression *b* is then printed onto the surface by the second roller set 34.

It is worth mentioning that in the second embossing step 94, the second roller set 34 is provided with two opposing rollers 341, and a cooling unit 342 is connected to the two second rollers 341. A coolant is directed into the second roller set 34 by the cooling unit 342, so the first roll pressed embossed sheet 4 can be cooled and fixed during pressing, and the shallow impression *a* and the deep impression *b* of the second embossed sheet 5 is fixed. Hence, the processing time is shortened to prevent the impressions from being deformed or sticking together or other such problems, and the yield rate can be improved.

In other words, the first embossed sheet 4 delivered from the exit of the two first rollers 331 enters into the entrance of the two second rollers 341, and is delivered from the exit of the two second rollers 341 to obtain the second embossed sheet 5.

In the first preferred embodiment, the temperature of the coolant which is delivered into the second roller set 34 is between 25 °C and 20 °C. The temperature of the coolant is determined by the heat of the second embossed sheet 5, and the coolant can include chilled water, or an ice crystal compound.

The depth of the impression of the first roller set 33 is determined by the separation distance of the two first rollers 331, and the second roller set 34 is determined by the separation distance of the two second rollers. The closer the two rollers are, the deeper the impression is, or otherwise. Therefore, the separation distance of the two first rollers 331 is farther, and the separation distance of the two second rollers 341 is closer.

The shallow impression *a* is printed by the first roller set 33 and the deep impression *b* is printed by the second roller set 34 to obtain the second embossed sheet 5 with laminated shallow and deep impressions *a* and *b,* and a side impression *c* is formed by the different depths of shallow and deep impressions *a* and *b.*

Through the side impression *c* is formed by the different depths, it can achieve an overall 3D decorative effect to satisfy visual impression requirements of consumers.

Finally, in the rolling step 95, the second embossed sheet 5 is cut into predetermined lengths to obtain the thermoplastic polyurethane texture 6. A cutter 37 is utilized to cut the embossed sheet 5, and a roller 38 is provided to roll up the cut thermoplastic polyurethane texture 6 for convenience of delivery and subsequent processing.

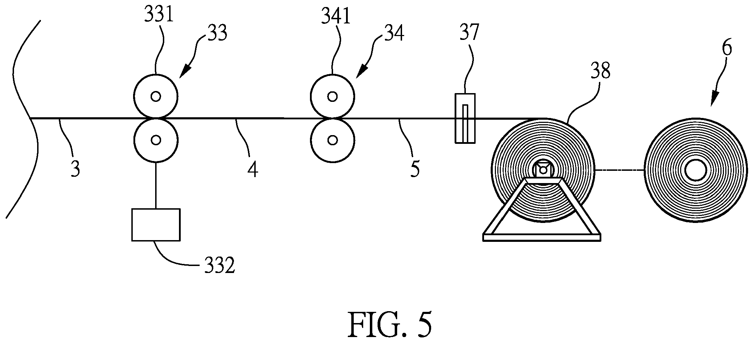

With reference to FIG. 5, a second preferred embodiment of present invention is provided. The second preferred embodiment is similar to the first, and so common features are not described again. A difference is that the surface treatment of the thermoplastic polyurethane texture 6 skips processing by the cooling unit 342, and instead adds a heating unit 332 connected to the two first rollers 331 in the first roller set 33.

The heat is directed into the first roller set 33 by the heating unit 332 connected to the two first rollers 331and heats the roll pressed unfinished sheet 3. The temperature provided by the heating unit is between 25°C and 100°C.

The second preferred embodiment concerns the subsequent processing of the unfinished sheet 3, which does not provide any heat. At that time, the unfinished sheet 3 is heated up by the two first heating rollers 331, so that the shallow impression *a* is printed to satisfy any requirement of the process and to obtain competitive advantages in the market.

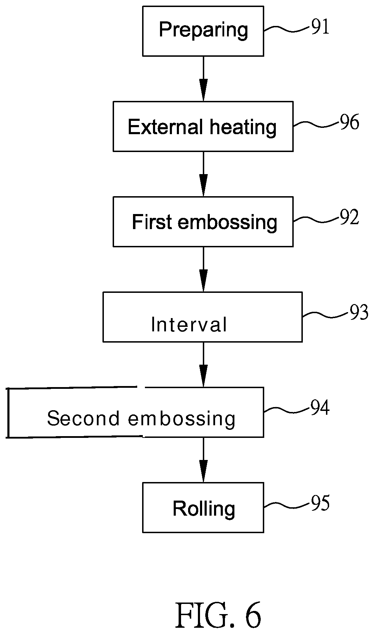

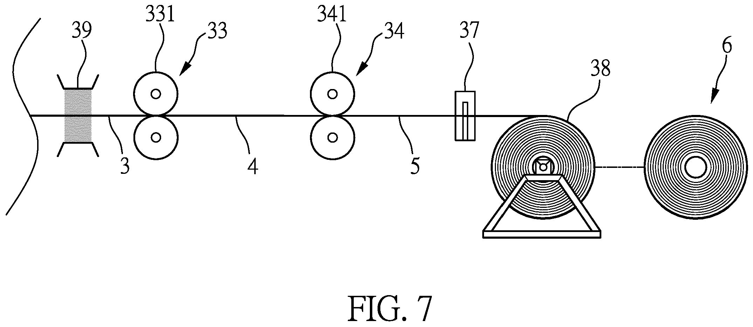

With reference to FIGs. 6 and 7, a third preferred embodiment of present invention is disclosed. The third embodiment is similar to the second, and so common features are not described again. A difference is that the third embodiment skips the heating unit 332, and adds an external heating step 96 which occurs between the preparing step 91 and the first embossing step 92.

In the external heating step 96, the unfinished sheet 3 is irradiated by an infrared lamp 39 (shown in FIG. 7) to maintain a predetermined temperature. The irradiation temperature of the infrared lamp 39 is between 25°C and 120°C. In practice, the lighting temperature of the infrared lamp 39 is adjustable based upon the prescription of the thermoplastic polyurethane31 by the users to soften the unfinished sheet 3 for convenience of the subsequent processes. Moreover, a hot air dryer or oven can be selected for the equipment to heat the unfinished sheet 3, and so shall not be construed as limiting the present invention.

With the aforementioned descriptions, the following benefits of the present method can be obtained:

### 1. Improved processing efficiencies

A coolant is directed into the second roller set 34 by the cooling unit 342, so that the first roll pressed embossed sheet 4 can be cooled and fixed during pressing, and the shallow impression *a* and the deep impression *b* of the second embossed sheet 5 can be fixed. Hence, the processing time can be shortened to prevent the impressions from being deformed or sticking together or such problems, and the yield rate can be improved.

### 2. Simplified processing and energy savings

One to 10 seconds after the shallow impression *a* is printed onto the surface by the first roller set 33, the deep impression *b* is directly printed onto the surface by the second roller set 34. It is not necessary to adjust or reverse the angle of the first embossed sheet 4 to print out the deep impression *b*, thus avoiding processing complications and providing for energy savings.

### 3. Improvements to the visual impression

Through the shallow impression *a* and deep impression *b* printed by the first and the second roller sets 33,34, and with the side impression *c* formed by the different depths, an overall 3D decoration effect is obtained to satisfy consumer requirements for visual impressions.

In conclusion, with the present invention, through a series of steps, a polyurethane material 31 performs a preparing step, a first embossing step, a second embossing step, an interval step and a rolling step to obtain a thermoplastic polyurethane texture 6. Hence, the processing times can be shortened to prevent the impressions from being deformed or sticking together or other such problems, and the yield rate can be improved, thereby providing competitive advantages in the market.

The foregoing detailed description is merely in relation to three preferred embodiments and shall not be construed as limiting the invention. It is to be understood that many other possible modifications and variations can be made without departing from the scope of the invention as hereinafter claimed.

## Claims

1. A method for surface treatment of a thermoplastic polyurethane texture to provide laminated deep and shallow impressions comprising the following steps:
a) preparing an unfinished thermoplastic polyurethane sheet (3);
b) roll pressing a surface of the unfinished sheet (3) by a first embossed roller set (33) so that a shallow impression is printed onto the surface to obtain a first embossed sheet (4), wherein the first roller set (33) is provided with two opposing first rollers (331) and a heating unit (332) is coupled to the two first rollers (331) such that heat is directed into the first roller set (33) by the heating unit (332) to heat the roll pressed unfinished sheet;
c) roll pressing the first embossed sheet (4) with the shallow impression by a second embossed roller set (34) so that a deep impression is printed onto the surface to obtain a second embossed sheet (5) with laminated shallow and deep impressions, wherein the second roller set (34) is provided with two opposing rollers (341), and a cooling unit (342) is coupled to the two second rollers (341) such that a coolant is directed into the two second rollers (341) by the cooling unit (342) so that the first roll pressed embossed sheet (4) is cooled and fixed during pressing; and
d) cutting the second embossed sheet (5) into predetermined lengths to obtain a thermoplastic polyurethane texture.

2. The method of claim 1, wherein in step a), the unfinished sheet (3) is prepared by the following
steps:
a-1) a thermoplastic polyurethane material is obtained; and
a-2) the thermoplastic polyurethane material is melted and extruded to obtain an intermediate unfinished sheet.

3. The method of claim 1, wherein in step b), wherein the heat provides a temperature between 25°C and 100°C.

4. The method of claim 1, further comprising a step e) that occurs between step b) and step c), wherein in step e), a delay of 1 to 10 seconds is introduced after the shallow impression is printed onto the surface by the first roller set (33) before the deep impression is printed onto the surface by the second roller set (34).

5. The method of claim 2, further comprising a step a-3) that occurs between step a-1) and step a-2), in which the thermoplastic polyurethane material is foamed by way of an added vesicant.

6. The method of claim 5, wherein in step a), the thermoplastic polyurethane material include one or more of methylene diphenyl diisocyanate, tolylene diisocyanate, polyether polyol, polycarbonate polyol.

7. The method of claim 6, wherein a hardness of the thermoplastic polyurethane material is between 45 Shore D and 85 Shore A.

8. The method of claim 1, wherein a temperature of the coolant is between 25°C and -20°C.

9. The method of claim 1, further comprising a step f) that occurs between step a) and step b), wherein in step f), the unfinished sheet (3) is irradiated by an infrared lamp to a predetermined temperature that is between 25°C and 120°C.

## Patentansprüche

1. Verfahren zur Oberflächenbehandlung einer thermoplastischen Polyurethantextur, um laminierte tiefe und flache Eindrücke bereitzustellen, umfassend die folgenden Schritte:
a) Herstellen einer unfertigen thermoplastischen Polyurethanbahn (3),
b) Walzpressen einer Fläche der unfertigen Bahn (3) durch einen ersten geprägten Walzensatz (33), so dass ein flacher Eindruck auf die Fläche gedruckt wird, um eine erste geprägte Bahn (4) zu erhalten, wobei der erste Walzensatz (33) mit zwei gegenüberliegenden ersten Walzen (331) bereitgestellt ist und eine Heizeinheit (332) an die zwei ersten Walzen (331) gekoppelt ist, so dass Hitze in den ersten Walzensatz (33) durch die Heizeinheit gerichtet wird, um die walzengepresste unfertige Bahn zu erhitzen;
c) Walzenpressen der ersten geprägten Bahn mit dem flachen Eindruck durch einen zweiten geprägten (34) Walzensatz, so dass ein tiefer Eindruck auf die Fläche gedruckt wird, um eine zweite geprägte Bahn (5) mit laminierten flachen und tiefen Eindrücken zu erhalten, wobei der zweite Walzensatz mit zwei gegenüberliegenden Walzen (341) bereitgestellt ist und eine Kühleinheit mit den zwei zweiten Walzen (34) (341) gekoppelt ist, so dass ein Kühlmittel in die zwei zweiten Walzen (341) durch die Kühleinheit (342) gerichtet wird, so dass die erste walzengepresste geprägte Bahn (4) während des Pressens gekühlt und fixiert wird; und
d) Schneiden der zweiten geprägten Bahn (5) in vorbestimmte Längen, um eine thermoplastische Polyurethantextur zu erhalten.

2. Verfahren nach Anspruch 1, wobei in Schritt a) die unfertige Bahn (3) durch die folgenden Schritte hergestellt wird:
a-1) Erhalten eines thermoplastischen Polyurethanmaterials; und
a-2) Schmelzen und Extrudieren des thermoplastischen Polyurethanmaterials, um eine unfertige Zwischenbahn zu erhalten.

3. Verfahren nach Anspruch 1, wobei in Schritt b) die Hitze eine Temperatur zwischen 25 °C und 100 °C bereitstellt.

4. Verfahren nach Anspruch 1, weiter umfassend einen Schritt e), der zwischen Schritt b) und Schritt c) erfolgt, wobei in Schritt e) eine Verzögerung von 1 bis 10 Sekunden eingeführt wird, nachdem der flache Eindruck auf die Fläche durch den ersten Walzensatz (33) gedruckt wird, bevor der tiefe Eindruck auf die Fläche durch den zweiten Walzensatz (34) gedruckt wird.

5. Verfahren nach Anspruch 2, weiter umfassend einen Schritt a-3), der zwischen Schritt a-1) und Schritt a-2) erfolgt, in dem das thermoplastische Polyurethanmaterial mit Hilfe eines zugegebenen Vesikants aufgeschäumt wird.

6. Verfahren nach Anspruch 5, wobei in Schritt a) das thermoplastische Polyurethanmaterial eines oder mehrere von Methylendiphenyldiisocyanat, Tolylendiisocyanat, Polyetherpolyol, Polycarbonatpolyol einschließt.

7. Verfahren nach Anspruch 6, wobei eine Härte des thermoplastischen Polyurethanmaterials zwischen 45 Shore D und 85 Shore A liegt.

8. Verfahren nach Anspruch 1, wobei eine Temperatur des Kühlmittels zwischen 25 °C und -20 °C liegt.

9. Verfahren nach Anspruch 1, weiter umfassend einen Schritt f), der zwischen Schritt a) und Schritt b) erfolgt, wobei in Schritt f) die unfertige Bahn (3) durch eine Infrarotlampe auf eine vorbestimmte Temperatur bestrahlt wird, die zwischen 25 °C und 120 °C liegt.

## Revendications

1. Procédé de traitement de surface d'une texture de polyuréthane thermoplastique pour fournir des impressions stratifiées profondes et peu profondes comprenant les étapes suivantes :
a) préparation d'une feuille de polyuréthane thermoplastique brute (3) :
b) pressage aux rouleaux d'une surface de la feuille brute (3) par un premier ensemble de rouleaux gaufrés (33) de telle sorte qu'une impression peu profonde est imprimée sur la surface pour obtenir une première feuille gaufrée (4),
dans lequel le premier ensemble de rouleaux (33) est doté de deux premiers rouleaux opposés (331) et une unité de chauffage (332) est couplée aux deux premier rouleaux (331) de telle sorte que de la chaleur est dirigée dans le premier ensemble de rouleaux (33) par l'unité de chauffage (332) pour chauffer la feuille brute pressée aux rouleaux ;
c) pressage aux rouleaux de la première feuille gaufrée (4) avec l'impression peu profonde par un second ensemble de rouleaux gaufrés (34)
de sorte qu'une impression profonde est imprimée sur la surface pour obtenir une seconde feuille gaufrée (5) avec des impressions stratifiées peu profondes et profondes, dans lequel le second ensemble de rouleaux (34) est doté de deux rouleaux opposés (341), et une unité de refroidissement (342) est couplée aux deux seconds rouleaux (341) de telle sorte qu'un réfrigérant est dirigé dans les deux seconds rouleaux (341) par l'unité de refroidissement (342) de sorte que la première feuille gaufrée pressée aux rouleaux (4) est refroidie et fixée lors du pressage ; et
d) découpe de la seconde feuille gaufrée (5) en longueurs prédéterminées pour obtenir une texture polyuréthane thermoplastique.

2. Procédé selon la revendication 1, dans lequel dans l'étape a), la feuille brute (3) est préparée par les étapes suivantes :
a-1) un matériau de polyuréthane thermoplastique est obtenu ; et
a-2) le matériau de polyuréthane thermoplastique est fondu et extrudé pour obtenir une feuille brute intermédiaire.

3. Procédé selon la revendication 1, dans lequel, dans l'étape b), la chaleur fournit une température comprise entre 25° C et 100° C.

4. Procédé selon la revendication 1, comprenant en outre une étape e) qui survient entre l'étape b) et l'étape c), dans lequel dans l'étape e), un retard de 1 à 10 secondes est introduit après que l'impression peu profonde est imprimée sur la surface par le premier ensemble de rouleaux (33) avant que l'impression profonde soit imprimée sur la surface par le second ensemble de rouleaux (34).

5. Procédé selon la revendication 2, comprenant en outre une étape a-3) qui survient entre l'étape a-1) et l'étape a-2), dans laquelle le matériau de polyuréthane thermoplastique est expansé au moyen d'un vésicant supplémentaire.

6. Procédé selon la revendication 5, dans lequel dans l'étape a), le matériau de polyuréthane thermoplastique inclut un ou plusieurs parmi du diisocyanate de diphényl méthylène, du diisocyanate de toluylène, du polyol de polyéther, du polyol de polycarbonate.

7. Procédé selon la revendication 6, dans lequel une dureté du matériau de polyuréthane thermoplastique est comprise entre 45 Shore D et 85 Shore A.

8. Procédé selon la revendication 1, dans lequel une température du réfrigérant est comprise entre 25° C et -20° C.

9. Procédé selon la revendication 1, comprenant en outre une étape f) qui survient entre l'étape a) et l'étape b), dans lequel dans l'étape f), la feuille brute (3) est irradiée par une lampe infrarouge à une température prédéterminée qui est comprise entre 25° C et 120° C.
